**Europäisches Patentamt**

**European Patent Office**

**Office européen des brevets**

(11) Numéro de publication : **0 511 067 A1**

(12) **DEMANDE DE BREVET EUROPEEN**

(21) Numéro de dépôt : **92401099.4**

(22) Date de dépôt : **17.04.92**

(51) Int. Cl.⁵ : **F16D 35/00**

(30) Priorité : **26.04.91 FR 9105202**

(43) Date de publication de la demande :
**28.10.92 Bulletin 92/44**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Guimbretiere, Pierre**
**103, route de St-Germain**
**F-78640 Neauphle Le Château (FR)**

(74) Mandataire : **Moncheny, Michel et al**
**c/o Cabinet Lavoix 2 Place d'Estienne d'Orves**
**F-75441 Paris Cedex 09 (FR)**

(54) **Dispositif de transmission à viscocoupleur contrôlé, notamment pour véhicule automobile.**

(57)    L'invention concerne un dispositif de transmission entre deux organes rotatifs coaxiaux (1 ; 10), du type comprenant un accouplement (11) à fluide visqueux comportant un élément menant et un élément mené et des moyens de commande pour modifier la caractéristique de fonctionnement de cet accouplement. Elle se caractérise notamment en ce que les moyens de commande sont intégrés au dispositif de transmission et agissent en fonction de la vitesse de rotation de l'un desdits organes et en fonction d'un couple transmis par le dispositif. Les moyens de commande peuvent comprendre des masselottes (21) solidaires en rotation de l'organe (1) et du boîtier (12) de l'accouplement à fluide visqueux, ces masselottes agissant pour modifier la pression interne dans l'accouplement (11), par l'intermédiaire de navettes (27) ainsi qu'un manchon coulissant (8) qui se déplace en fonction du couple transmis entre le planétaire (2) et l'arbre de sortie (10). Ce manchon coulissant peut par exemple agir sur un plateau (16) qui modifie l'écartement entre les disques (14, 15) de l'accouplement.

Application notamment aux véhicules à quatre roues motrices.

FIG.1

EP 0 511 067 A1

La présente invention concerne les dispositifs de transmission, notamment pour véhicules automobiles et plus précisément de tels dispositifs comprenant un accouplement à fluide visqueux désigné en général par les termes viscocoupleur ou viscotransmetteur.

Ces viscocoupleurs ou viscotransmetteurs sont du type comprenant un élément intérieur et un élément extérieur rotatifs, coaxiaux, délimitant entre eux une enceinte contenant un fluide visqueux, chaque élément étant solidaire en rotation d'une série de disques, les disques des deux séries étant alternés et noyés au moins en partie dans le fluide visqueux. L'un des éléments est menant et l'autre élément est entraîné à partir du premier sous l'effet du couple résistant dû au cisaillement du fluide visqueux par les disques. Ce couple résistant C varie en fonction de la différence de vitesse $\Delta$ n entre les deux éléments intérieur et extérieur, $C = f(\Delta n)$.

On a déjà cherché à modifier la caractéristique de fonctionnement $C = f(\Delta n)$ d'un tel accouplement, par exemple en faisant intervenir le couple transmis par le dispositif. Cependant la prise en compte de ce seul paramètre couple peut être insuffisante, par exemple lorsqu'il s'agit de faciliter les manoeuvres du véhicule à faible vitesse, lors de manoeuvres de parking, ou bien encore lorsqu'une telle transmission est associée à des systèmes anti-patinage et/ou anti-emballement des roues. Le terme anti-patinage vise la situation dans laquelle les roues peuvent se bloquer lors d'un freinage et patiner par rapport au sol. Le terme anti-emballement vise au contraire la situation où les roues peuvent patiner au démarrage sous l'effet d'un couple trop important pour les caractéristiques de friction du sol.

Le but de cette invention est de proposer un dispositif qui permette de résoudre ce problème et de faire varier de façon plus efficace et plus favorable la caractéristique de fonctionnement de l'accouplement à fluide visqueux.

A cet effet l'invention a pour objet un dispositif de transmission entre deux organes rotatifs coaxiaux, comprenant un accouplement à fluide visqueux et des moyens de commande pour modifier la caractéristique de fonctionnement de cet accouplement, caractérisé en ce que lesdits moyens de commande sont intégrés au dispositif et agissent en fonction de la vitesse de rotation de l'un desdits organes et d'un couple transmis par le dispositif.

Suivant d'autres caractéristiques :

- la modification de la caractéristique de fonctionnement de l'accouplement s'effectue en premier lieu en fonction de ladite vitesse de rotation;
- la modification de la caractéristique de fonctionnement de l'accouplement s'effectue en premier lieu en fonction dudit couple;
- la vitesse prise en compte est celle de l'élément menant du dispositif d'accouplement;
- la vitesse prise en compte est celle de l'élément mené du dispositif d'accouplement;
- il comprend des moyens empêchant la prise en compte de l'un des deux paramètres, vitesse et couple, aussi longtemps que l'autre paramètre n'a pas atteint une valeur de seuil prédéterminée;
- les deux organes rotatifs sont deux des organes d'entrée et de sortie d'un différentiel, la vitesse prise en compte étant celle de l'un de ces deux organes, tandis que le couple pris en compte est celui qui transite entre l'un desdits organes et l'accouplement;
- il est interposé entre deux tronçons d'arbre coaxiaux.

L'invention va être décrite plus en détails ci-dessous en se référant aux dessins annexés, donnés uniquement à titre d'exemples et sur lesquels :

La Fig. 1 est une vue partielle en coupe d'un dispositif de transmission suivant l'invention;

La Fig. 2 est une vue en coupe suivant la ligne 2-2 de la Fig. 1;

La Fig. 3 est une vue en coupe suivant la ligne 3-3 de la Fig.1;

La Fig. 4 est une vue partielle en coupe d'une variante de réalisation;

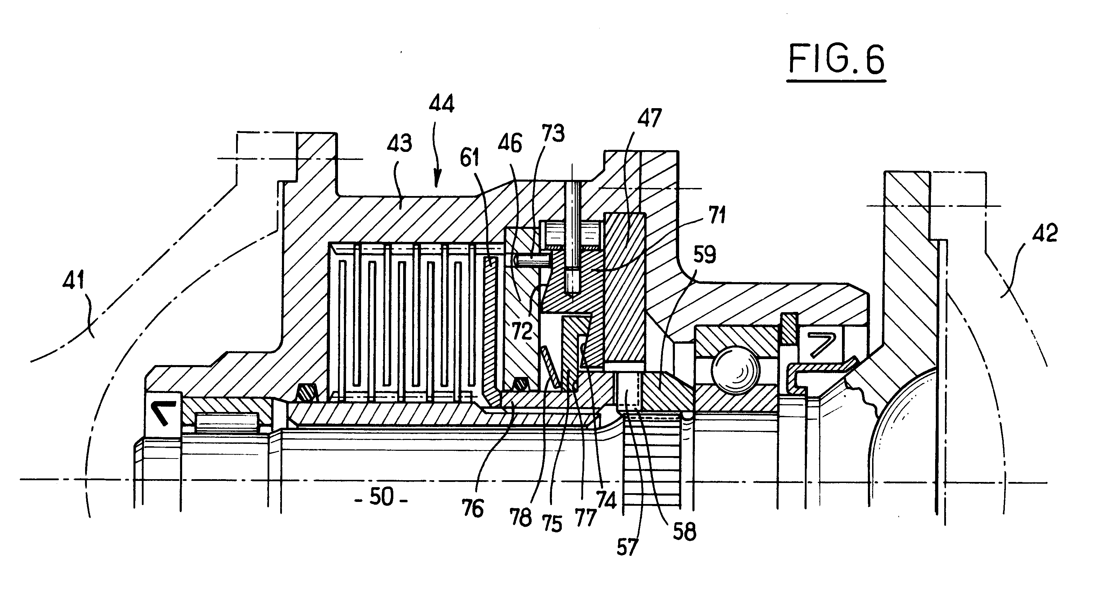

Les Fig. 5 et 6 sont deux vues en coupe longitudinale de deux autres variantes de réalisation.

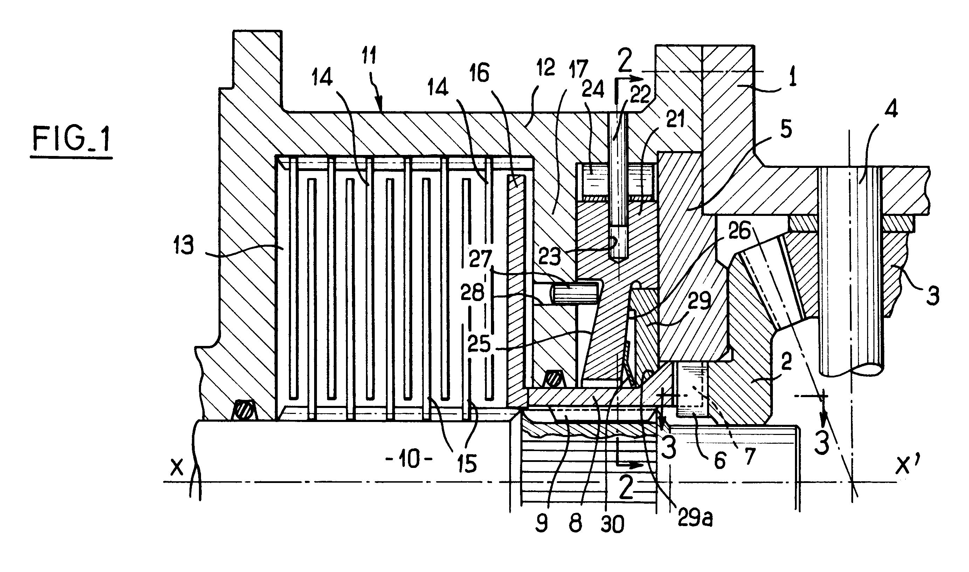

On a représenté sur la Fig. 1 une partie d'un différentiel de véhicule automobile comprenant un boîtier 1, des planétaires 2 dont un seul est visible sur dessin ainsi que des satellites tels que celui désigné par la référence 3, portés par un axe porte-satellites 4.

Le planétaire 2 est en appui contre une paroi 5 du boîtier et comporte à sa partie arrière au moins une rampe 6 coopérant avec au moins une rampe complémentaire 7 portée par un manchon 8 relié par des cannelures 9 à un arbre de sortie 10 d'axe X-X.

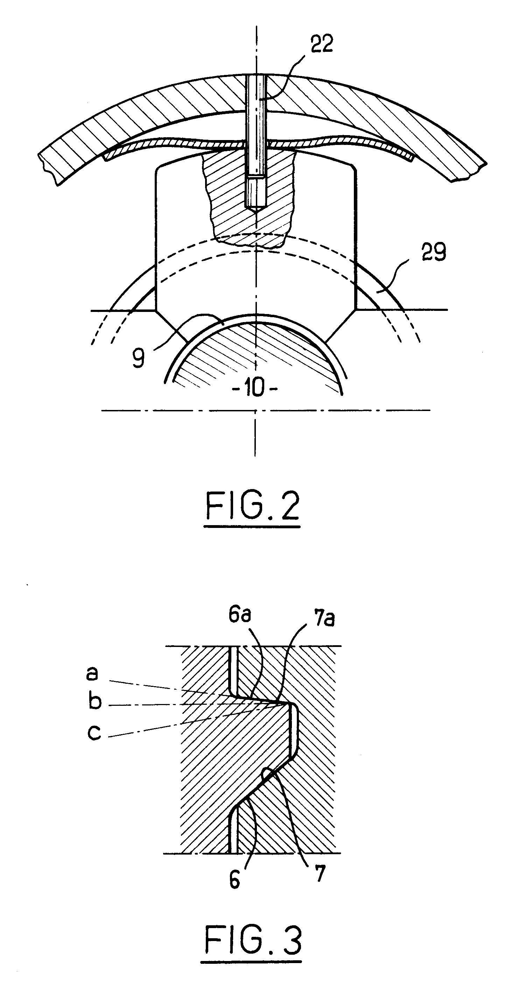

La forme de ces rampes est mieux visible sur la Fig.3.

Un premier jeu de rampes 6, 7 intervient lorsque le dispositif d'accouplement doit transmettre un couple moteur, tandis que le deuxième jeu $6^a$, $7^a$ est sollicité lorsque le dispositif transmet un couple de freinage.

Comme représenté respectivement en trait plein et en trait mixte sur la Fig. 3, ce deuxième jeu de rampes peut avoir par rapport à la direction axiale X-X une inclinaison (c) dans le même sens que celle des rampes 6, 7, une inclinaison nulle (b) ou une inclinaison (a) de sens opposé à celle des rampes 6, 7.

Entre le boîtier 1 du différentiel et l'arbre de sortie 10 est interposé un dispositif d'accouplement 11 à fluide visqueux comprenant un boîtier extérieur 12 fixé sur le boîtier du différentiel et qui délimite avec l'arbre 10 une enceinte 13 remplie au moins en partie d'un fluide visqueux approprié tel qu'une huile silicone.

Le dispositif d'accouplement comprend, comme cela est bien connu deux séries de disques alternés 14, 15 respectivement solidaires en rotation du boîtier 12 et de l'arbre 10.

De plus, un plateau 16 mobile axialement est disposé dans le boîtier 12 et en contact avec l'extrémité adjacente du manchon 8 qui s'étend à joint étanche à travers une paroi 17 du boîtier 12. Entre la paroi 5 du boîtier de différentiel et la paroi 17 du boîtier de l'accouplement, sont disposés les moyens de commande suivants :

Quatre masselottes 21 mobiles radialement et régulièrement espacées angulairement sont guidées entre les deux faces en regard des parois 5 et 17. Ces masselottes sont par ailleurs guidées et rendues solidaires en rotation du boîtier par des pions de guidage 22 reçus dans des alésages 23. Des ressorts 24, par exemple des ressorts à lame tels que représentés sur la Fig. 2, sollicitent les diverses masselottes radialement vers l'intérieur. Chaque masselotte délimite, dans sa partie radiale interne, deux rampes 25, 26 orientées dans le même sens mais sous des angles différents. La première 25, dirigée vers le dispositif d'accouplement coopère avec une navette 27 reçue dans un orifice 28 percé dans la paroi 17. Cette navette lorsqu'elle est actionnée, a pour effet de modifier le volume de l'enceinte 13 et par conséquent la pression interne dans cette dernière.

La rampe 26 de chaque masselotte dirigée vers le différentiel sert d'appui pour un disque 29 qui sert lui-même de butée pour le manchon 5. Les surfaces de contact 29ª entre le manchon et le disque sont de préférence des surfaces tronconiques. Un ressort de rappel 30, tendant à écarter le disque de la masselotte est interposé entre ces deux pièces.

Le fonctionnement d'un tel dispositif est le suivant : lorsqu'une vitesse relative apparaît entre le boîtier 1 de différentiel et l'arbre de sortie 10, l'accouplement à fluide visqueux intervient pour contrôler et limiter cette différence de vitesse. En-deçà d'une vitesse de rotation déterminée du boîtier 1, le mécanisme de commande occupe la position représentée au dessin, c'est-à-dire que les masselottes 21 sont dans leur position la plus proche de l'axe X-X et empêchent le déplacement axial du manchon 5, par l'intermédiaire du disque 28.

Dès lors qu'une certaine vitesse de rotation du boîtier est atteinte, déterminée par le tarage des ressorts 24, les masselottes 21 se déplacent radialement vers l'extérieur et l'action de la rampe 25 sur la navette 27 a pour effet de modifier la caractéristique de fonctionnement de l'accouplement à fluide visqueux. Ce déplacement radial vers l'extérieur des masselottes a également pour effet d'autoriser un déplacement axial du disque 29, de sorte que sous l'effet du couple transmis par le planétaire 2 au manchon 5, ce dernier est amené à se déplacer axialement et à agir sur le plateau 16. Le déplacement de ce plateau modifie l'écartement entre les disques du dispositif d'accouplement et modifie par conséquent de façon supplémentaire la caractéristique de fonctionnement de ce dernier.

On voit donc que le dispositif selon l'invention permet de prendre en compte à la fois la vitesse de rotation du boîtier de différentiel et un couple transmis par ce différentiel, pour modifier la caractéristique de fontionnement du viscocoupleur. Ces deux paramètres sont pris en compte dans un ordre déterminé, c'est-à-dire en premier lieu la vitesse puis en second lieu le couple, ce qui semble le plus favorable dans l'application considérée.

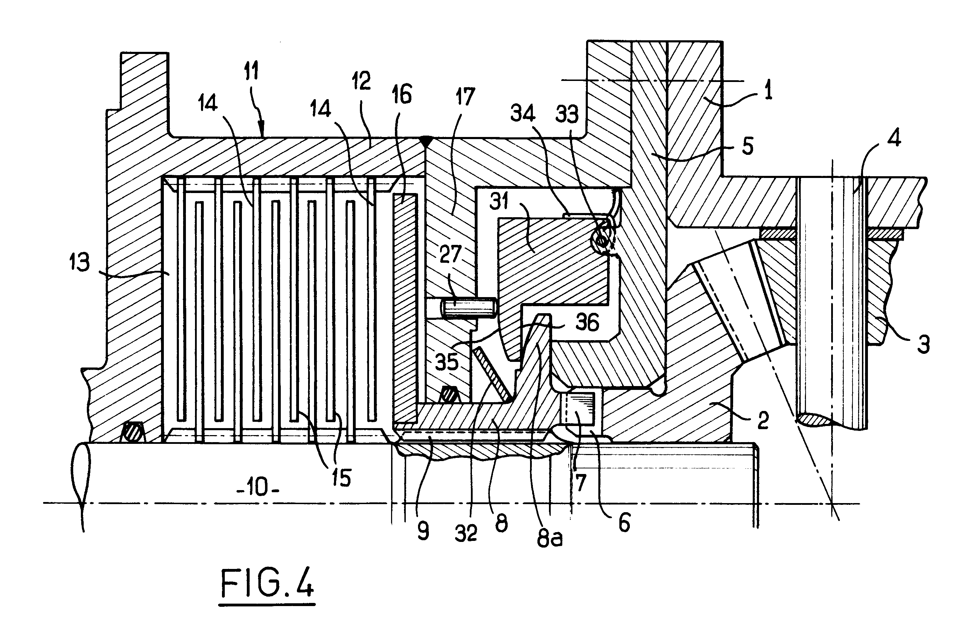

Dans le mode de réalisation représenté à la Fig. 4, les éléments correspondant à ceux de la Fig. 1 sont désignés par les mêmes numéros de référence.

Dans cette variante, le manchon 8 comporte une collerette radiale 8ª dont une face plane est en appui contre une partie de la paroi 5 tandis que son autre face incurvée est en appui contre les masselottes 31. Un ressort de rappel constitué par une rondelle Belleville 32 sollicite ce manchon vers le planétaire 2. Chaque masselotte est articulée autour d'un axe 33 sur la paroi 5 du boîtier de différentiel au lieu d'être montée coulissante. Elle est rappelée par un ressort en épingle 34. Chaque masselotte est en contact par une rampe 35 avec au moins une navette 27 et sert de butée en 36 pour le manchon 8.

Le fonctionnement de ce dispositif est peu différent de celui décrit à propos de la Fig. 1. En effet en-deçà d'une vitesse de rotation déterminée du boîtier de différentiel, les masselottes 31 sont en position basse et le manchon 8 est maintenu dans la position représentée au dessin. Le couple transmis par le planétaire 2 est sans effet sur la position axiale du manchon qui vient en butée contre les masselottes.

Ce n'est qu'à partir d'une vitesse de rotation déterminée de ce boîtier que les masselottes sont sollicitées vers l'extérieur, et commencent à basculer autour de leurs axes d'articulation 33. Ce faisant, elles provoquent un déplacement des navettes 27 en direction du dispositif d'accouplement, modifiant ainsi la caractéristique de ce dernier.

Le déplacement des masselottes 31 vers l'extérieur a également pour effet de libérer le manchon 8 qui peut alors sous l'effet de la force résultant du couple exercé au niveau des rampes 6 et 7, se déplacer vers la gauche et repousser le plateau 16. Ce déplacement a pour effet de modifier l'écartement entre les disques de l'accouplement et par conséquent de modifier la caractéristique de fonctionnement de ce dernier.

Dans les deux modes de réalisation décrits ci-dessus, le dispositif selon l'invention était utilisé pour contrôler le fonctionnement d'un différentiel.

Dans les deux modes de réalisation suivants, ce dispositif est utilisé en tant que viscotransmetteur, entre deux organes 41, 42 tels que deux tronçons d'un arbre de transmission longitudinal. L'organe 41 est

fixé à un boîtier 43 qui constitue un des deux éléments d'un dispositif d'accouplement 44 à fluide visqueux. Ce boltier est complété par un couvercle d'extrémité 45 et par deux cloisons radiales 46 et 47. Dans ce boîtier est supporté à rotation par des roulements 48 et 49 un arbre 50, relié par exemple par une bride à l'autre tronçon 42 de la transmission. L'élément intérieur du dispositif d'accouplement est un arbre creux 51 cannelé extérieurement en 52, qui est monté libre en rotation par rapport au boîtier 43 et par rapport à l'arbre intérieur 50. A l'intérieur de l'enceinte délimitée par le boîtier 43, la paroi 46 et l'arbre creux 51 sont disposées deux séries de disques alternés 53, 54 respectivement solidaires en rotation du boîtier et de l'arbre creux. Ce dernier est rendu solidaire en rotation par des cannelures 55 d'un manchon 56 qui est monté coulissant et qui est relié par des rampes 57, 58 à une bague 59 elle-même reliée par des cannelures 60 à l'arbre 50. Le manchon coulissant 56 traverse à joint étanche la paroi 46 du boîtier et est en appui contre un plateau 61 susceptible de se déplacer axialement pour modifier l'écartement entre les disques 53 et 54.

Le dispositif est complété par un ensemble tel que déjà décrit à propos des figures précédentes 1 et 2 et qui comprend quatre masselottes 62 montées coulissantes radialement entre les deux parois 46 et 47 et guidées par rapport au boîtier par des pions de centrage 63. Ces masselottes sont sollicitées radialement vers l'intérieur par des ressorts à lame 64. Elles agissent sur des navettes 65 montées coulissantes dans des orifices de la paroi 46, et servent de butées pour un disque 66 sur lequel vient en appui une partie inclinée du manchon 56. Ce disque et par conséquent le manchon sont sollicités vers la droite en considérant la Fig. 4 par un ressort de rappel 67.

Si l'on suppose que l'organe 41 constitue un organe menant, le fonctionnement du dispositif est le suivant :

Le boîtier 43 est entraîné en rotation et entraîne l'arbre creux 51 par l'intermédiaire du dispositif d'accouplement à fluide visqueux 44. Cet arbre 51 entraîne lui-même l'arbre 50 et l'organe de sortie par l'intermédiaire du manchon 56 et de la bague 59. Aussi longtemps que le boîtier tourne à une vitesse inférieure à une valeur prédéterminée, les masselottes et le manchon 56 conservent la position représentée au dessin et ne modifient pas la caractéristique de fonctionnement de l'accouplement à fluide visqueux. Ce n'est qu'à partir du moment où le boîtier 43 atteint une vitesse de rotation déterminée, que les masselottes 62 sont sollicitées radialement vers l'extérieur par la force centrifuge et agissent sur les navettes 65 pour modifier la caractéristique de fonctionnement de l'accouplement. Ce faisant les masselottes libèrent également le manchon 56 qui sous l'action du couple qui s'exerce au niveau des rampes 57 et 58 se déplace axialement pour repousser le plateau 61 à l'encontre du ressort 30, et diminuer l'écartement des disques du dispositif d'accouplement.

Il est à noter que dans un tel agencement, l'arbre 50 peut également être utilisé comme organe d'entrée, le boîtier 43 devenant alors organe de sortie. Dans ce second cas c'est la vitesse de l'organe de sortie qui détermine le changement de caractéristique du dispositif d'accouplement.

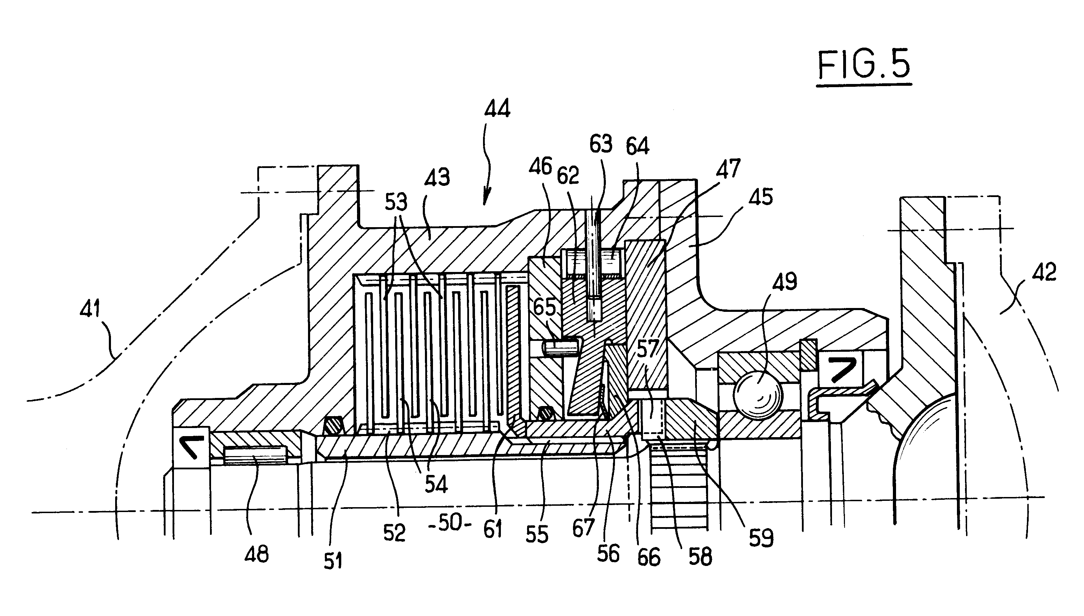

Dans la variante de la Fig. 5, les éléments correspondant à ceux de la Fig. 4 sont désignés par les mêmes numéros de référence.

Le dispositif a été adapté pour que la caractéristique de fonctionnement de l'accouplement à fluide visqueux soit modifiée en premier lieu en fonction du couple, la variation en fonction de la vitesse de l'un des éléments n'intervenant que dans un second temps.

A cet effet chaque masselotte 71 comporte deux rampes, une première rampe 72 située dans sa partie radiale externe et destinée à coopérer avec la navette 73 et une seconde rampe 74 disposée radialement plus à l'intérieur, et qui est en contact avec le disque 75. Dans ce cas, le disque est placé axialement entre la rampe 74 de la masselotte et la paroi 47 délimitant le dispositif d'accouplement. Le manchon 76 est en appui par un épaulement radial 77 contre le disque 75, ce dernier étant rappelé vers la droite en considérant le dessin par une rondelle Belleville 78.

Avec un tel agencement, dans la position représentée au dessin, les masselottes 71 sont bloquées en position radiale interne par le disque 75 qui sert de butée. Lorsque le couple transmis au niveau des rampes 57 et 58 devient suffisant, le manchon 76 est déplacé vers la gauche en considérant la Fig. 5, ce qui a pour effet d'une part de déplacer le plateau 61 et d'autre part de déplacer vers la gauche le disque 75 à l'encontre de l'action du ressort 78. Les masselottes sont alors libérées et peuvent agir sur les navettes 73 pour modifier également la caractéristique de fonctionnement de l'accouplement à fluide.

Bien entendu des rampes telles que représentées à la Fig. 3 peuvent être prévues dans les diverses variantes envisagées, tout en restant dans le cadre de l'invention.

Par ailleurs deux dispositifs tels que décrits à propos des Fig. 4 et 5 peuvent être combinés pour, par exemple, remplacer un différentiel classique d'essieu.

Dans ce cas, il suffit de prévoir un carter double, solidaire d'une roue dentée constituant un organe d'entrée, ce carter double étant commun à deux accouplements et le reste du dispositif étant conforme à ce qui est représenté aux Fig. 4 et 5. Les organes de sortie des deux dispositifs sont alors reliés par les moyens habituels respectivement à l'une des roues du véhicule.

## Revendications

1. Dispositif de transmission entre deux organes rotatifs coaxiaux, comprenant un accouplement (11; 44) à fluide visqueux comportant un élément menant et un élément mené et des moyens de commande pour modifier la caractéristique de fonctionnement de cet accouplaient, caractérisé en ce que lesdits moyens de commande sont intégrés au dispositif et agissent en fonction de la vitesse de rotation de l'un desdits organes et en fonction d'un couple transmis par le dispositif.

2. Dispositif suivant la revendication 1, caractérisé en ce que la modification de la caractéristique de fonctionnaient de l'accouplement s'effectue en premier lieu en fonction de ladite vitesse de rotation.

3. Dispositif suivant la revendication 1, caractérisé en ce que la modification de la caractéristique de fonctionnement de l'accouplement s'effectue en premier lieu en fonction dudit couple.

4. Dispositif suivant l'une quelconque des revendications précédentes, caractérisé en ce que la vitesse prise en compte est celle de l'élément menant du dispositif d'accouplement.

5. Dispositif suivant l'une quelconque des revendications précédentes, caractérisé en ce que la vitesse prise en compte est celle de l'élément mené du dispositif d'accouplement.

6. Dispositif suivant l'une quelconque des revendications précédentes, caractérisé en ce qu'il comprend des moyens internes empêchant la prise en compte de l'un des deux paramètres, vitesse et couple, aussi longtemps que l'autre paramètre n'a pas atteint une valeur de seuil prédéterminée.

7. Dispositif suivant l'une quelconque des revendications précédentes, caractérisé en ce que les deux organes rotatifs sont deux des organes d'entrée (1) et de sortie (2) d'un différentiel, la vitesse prise en compte étant celle de l'un de ces deux organes, tandis que le couple pris en compte est celui qui transite entre l'un desdits organes et le dispositif d'accouplement.

8. Dispositif suivant l'une quelconque des revendications 1 à 6, caractérisé en ce qu'il est interposé entre deux tronçons d'arbre coaxiaux (41; 42).

9. Dispositif suivant l'une quelconque des revendications précédentes, caractérisé en ce que les moyens de commande comprennent des masselottes (21; 62; 71) mobiles sous l'effet de la force centrifuge et solidaires en rotation de l'un ( 12; 43 ) desdits organes rotatifs, chaque masselotte comportant une surface active (25; 72) coopérant avec une pièce (65; 73) susceptible de modifier la caractéristique de fonctionnement du dispositif d'accouplement.

10. Dispositif suivant la revendication 9, caractérisé en ce que chaque masselotte agit sur une navette montée coulissante dans un perçage d'une paroi adjacente du dispositif d'accouplement.

11. Dispositif suivant la revendication 9, caractérisé en ce qu'il est prévu un organe élastique (24; 64) sollicitant chaque masselotte radialement vers l'intérieur.

12. Dispositif suivant l'une quelconque des revendications précédentes, caractérisé en ce que les moyens de commande comprennent un organe (8; 56; 76) monté coulissant axialement et relié à l'un des deux organes rotatifs par au moins un jeu de rampes (6, 7; 57, 58), cet organe coulissant étant mobile axialement en fonction du couple qui s'exerce au niveau des rampes, et agissant sur un organe (16; 61) susceptible de modifier la caractéristique de fonctionnement du dispositif d'accouplement.

13. Dispositif suivant la revendication 12, caractérisé en ce qu'il est prévu au moins deux jeux de rampes (6, 7; $6^a$, $7^a$) entre l'organe coulissant et l'organe rotatif adjacent, qui interviennent respectivement lorsque le dispositif transmet des couples de sens opposés, et qui présentent des caractéristiques d'inclinaison différentes.

14. Dispositif suivant la revendication 13, caractérisé en ce que les rampes des deux jeux de rampes sont inclinées dans le même sens mais sous des angles différents.

15. Dispositif suivant la revendication 13, caractérisé en ce que les rampes de l'un des jeux de rampes sont parallèles à l'axe du dispositif.

16. Dispositif suivant la revendication 13, caractérisé en ce que les jeux de rampes sont inclinés dans des sens opposés et sous des angles différents.

17. Dispositif suivant la revendication 12, caractérisé en ce que l'organe coulissant est un manchon (8; 56), il est prévu un disque (29; $8^a$; 66) interposé entre ce manchon et au moins l'une des masselottes, ce disque étant en appui contre une surface adjacente de la masselotte et servant de butée pour empêcher le déplacement axial du manchon aussi longtemps que la masselotte ne s'est pas déplacée radialement vers l'extérieur sous l'effet de la force centrifuge.

18. Dispositif suivant la revendication 17, caractérisé en ce qu'un ressort (30; 67) est interposé entre la masselotte et le disque ou le manchon adjacent, tendant à écarter l'un de l'autre ces deux éléments.

19. Dispositif suivant l'une quelconque des revendications précédentes, caractérisé en ce que le dispositif d'accouplement est du type comprenant un élément intérieur (10; 50) et un élément extérieur (24; 43) rotatifs, coaxiaux, délimitant entre eux une enceinte contenant un fluide visqueux, chaque élément étant solidaire en rotation d'une série de disques (19, 15; 53, 54), les disques des deux séries étant alternés et noyés au moins en partie dans le fluide visqueux.

20. Dispositif suivant les revendications 17 et 19, caractérisé en ce que l'élément extérieur ou boîtier 12) du dispositif d'accouplement est solidaire du boîtier (1) d'un différentiel, tandis que le manchon coulisssant (8) est relié par des rampes (6, 7) à l'un des planétaires (2) de ce différentiel, et par des cannelures (9) à un arbre de sortie (10) qui constitue l'élément intérieur du dispositif d'accouplement.

21. Dispositif suivant l'une quelconque des revendications 9 à 20, caractérisé en ce que la ou chaque masselotte (21; 62; 71) est montée de façon à pouvoir coulisser radialement.

22. Dispositif suivant l'une quelconque des revendications 9 à 20, caractérisé en ce que la ou chaque masselotte (31) est articulée autour d'un axe (33).

23. Dispositif suivant l'une quelconque des revendications 21 et 22, caractérisé en ce que la ou chaque masselotte est solidaire en rotation de l'élément extérieur ou boîtier du dispositif d'accouplement.

24. Dispositif suivant l'une quelconque des revendications 12 à 23, caractérisé en ce que le manchon coulissant (56; 76) est relié par au moins un jeu de rampes (57, 58) à une bague (59) solidaire en rotation d'un arbre (50) qui constitue l'un des deux organes rotatifs reliés par le dispositif de transmission.

25. Dispositif suivant l'une quelconque des revendications 12 à 24, caractérisé en ce que l'organe coulissant comporte une saillie radiale (75) formant butée qui maintient la ou chaque masselotte en position radiale interne, aussi longtemps que cet organe coulissant n'a pas été déplacé en direction du dispositif d'accouplement.

26. Dispositif suivant l'une quelconque des revendications 8 à 25, caractérisé en ce qu'il est double et comprend un organe d'entrée unique pour les deux accouplements et deux organes de sortie reliés, respectivement, à l'une des roues motrices d'un véhicule.

FIG_1

FIG.2

FIG.3

FIG.4

FIG.5

EP 0 511 067 A1

FIG.6

Office européen
des brevets

**RAPPORT DE RECHERCHE EUROPEENNE**

Numero de la demande

EP    92 40 1099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 684 743 (TROFIMOV) | 1-4,8,9, 11,12, 19,22 | F16D35/00 |
| A | * le document en entier *<br>--- | 6 | |
| Y | DE-C-3 918 822 (VISCODRIVE)<br><br>* le document en entier *<br>--- | 1-4,8,9, 11,12, 19,22 | |
| A | PATENT ABSTRACTS OF JAPAN<br>vol. 7, no. 59 (M-199)(1204) 11 Mars 1983<br>& JP-A-57 204 348 ( HONDA ) 15 Décembre 1982<br>* abrégé *<br>--- | 2,5,9, 11,19, 21,23 | |
| A | US-A-2 714 946 (TENOT)<br>* le document en entier *<br>--- | 10,19 | |
| A | DE-B-1 288 361 (MAYBACH)<br>* le document en entier *<br>--- | 12,13,15 | |
| A | GB-A-2 135 424 (HONDA)<br>* le document en entier *<br>--- | 12,13,16 | DOMAINES TECHNIQUES RECHERCHES (Int. Cl.5)<br><br>F16D |
| P,A | EP-A-0 479 639 (GLAENZER SPICER) 8 Avril 1992<br>* colonne 2, ligne 37 - ligne 48 *<br><br>----- | 12-16 | |

Le présent rapport a été établi pour toutes les revendications

| Lieu de la recherche | Date d'achèvement de la recherche | Examinateur |
|---|---|---|
| LA HAYE | 28 JUILLET 1992 | BALDWIN D.R. |